# EUROPEAN PATENT SPECIFICATION

(11) **EP 3 616 148 B1**
(45) Date of publication and mention of the grant of the patent: **24.01.2024**
(21) Application number: 18733421.4
(22) Date of filing: 30.05.2018
(51) Int. Cl.: G06Q 20/32, G06Q 20/36

(54) **NOTIFICATION BASED PROVISIONING OF CARD ACCOUNTS**
BENACHRICHTIGUNGSBASIERTE BEREITSTELLUNG VON KARTENKONTEN
FOURNITURE DE COMPTES DE CARTE SUR LA BASE D'UNE NOTIFICATION

(30) Priority: 02.06.2017 US 201762514751 P
(43) Date of publication of application: 04.03.2020
(73) Proprietor: Apple Inc., Cupertino, CA 95014 (US)
(72) Inventor: BLAKESLEY, Scott D., Sunnyvale, California 94085 (US); CHESTER, Benjamin D., Cupertino, California 95014 (US); SHARP, Christopher, Sunnyvale, California 94085 (US); STEELE, Glen W., Cupertino, California 95014 (US); DAVE, Pritesh M., Cupertino, California 95014 (US); VAID, Yousuf H., Sunnyvale, California 94085 (US)
(74) Representative: Simmons & Simmons
(86) International application number: PCT/US2018/035196
(87) International publication number: WO 2018/222757

(56) References cited:
- WO-A1-2015/183551
- WO-A2-2012/091349

## Description

### CROSS-REFERENCE TO RELATED APPLICATIONS

### TECHNICAL FIELD

The present description relates generally to notification based provisioning of card accounts, including notification based provisioning of applets corresponding to card accounts for a wireless or contactless transaction system.

### BACKGROUND

In a wireless transaction system, devices, such as phones, smart watches, etc., may also be used to conduct wireless transactions with wireless transaction terminals. For example, one or more applets that correspond to one or more card accounts (e.g., credit card accounts, debit card accounts, loyalty card accounts, etc.), may be provisioned on a secure element of an electronic device and used to conduct wireless transactions with wireless transaction terminals.

### BRIEF DESCRIPTION OF THE DRAWINGS

Certain features of the subject technology are set forth in the appended claims. However, for purpose of explanation, several embodiments of the subject technology are set forth in the following figures.
FIG. 1 illustrates an example network environment in which a system for notification based provisioning of card accounts may be implemented in accordance with one or more implementations.
FIG. 2 illustrates an example electronic device that may be used in system for notification based provisioning of card accounts in accordance with one or more implementations.
FIG. 3 illustrates an example electronic device including an example secure element that may be used in a system for notification based provisioning of card accounts in accordance with one or more implementations.
FIG. 4 illustrates a flow diagram of an example process for notification based provisioning of card accounts in accordance with one or more implementations.
FIGs. 5A-B illustrate an example process flow in a system for notification based provisioning of card accounts in accordance with one or more implementations.
FIG. 6 conceptually illustrates an electronic system with which aspects of the subject technology may be implemented in accordance with one or more implementations.

### DETAILED DESCRIPTION

The invention is defined by the appended claims. The detailed description set forth below is intended as a description of various configurations of the subject technology and is not intended to represent the only configurations in which the subject technology can be practiced. The appended drawings are incorporated herein and constitute a part of the detailed description. The detailed description includes specific details for the purpose of providing a thorough understanding of the subject technology. However, the subject technology is not limited to the specific details set forth herein and can be practiced using one or more other implementations. In one or more implementations, structures and components are shown in block diagram form in order to avoid obscuring the concepts of the subject technology.

In wireless transaction systems, one or more applets that correspond to a user's card accounts may be provisioned on a secure element of the user's device(s). The applets (credentials) on the secure element may be used to conduct wireless transactions with wireless transaction terminals, e.g., in lieu of using the physical cards that correspond to the card accounts. However, a user may need to add each card account to the wireless transaction system to have the corresponding applet provisioned on the user's device(s), which may, in a user's mind, be a daunting process that may create a perceived barrier to entry for utilizing the wireless transaction system. Further, a user may be required to separately add a card account to each of the user's devices on which the corresponding applet may be used, e.g., for electronic payment transactions.

The subject system provides a mechanism that proactively notifies a user of their card accounts that may be added to the wireless transaction system and enables the user to easily add such card accounts, thereby removing the perceived barrier to entry for utilizing the wireless transaction system. For example, the subject system may receive an indication of a card account of a user, such as from the entity that issued the card account, and/or from other sources. The subject system may then confirm that the card account is eligible to be added to the wireless transaction system. If the card account is eligible, the subject system proactively transmits a notification message to one or more of the user's devices, informing the user that they have a card account that is eligible to be added to the wireless transaction system. If the user approves of having the card account added to the wireless transaction system, the subject system initiates provisioning an applet corresponding to the card account on the user's device to add the card account to the wireless transaction system.

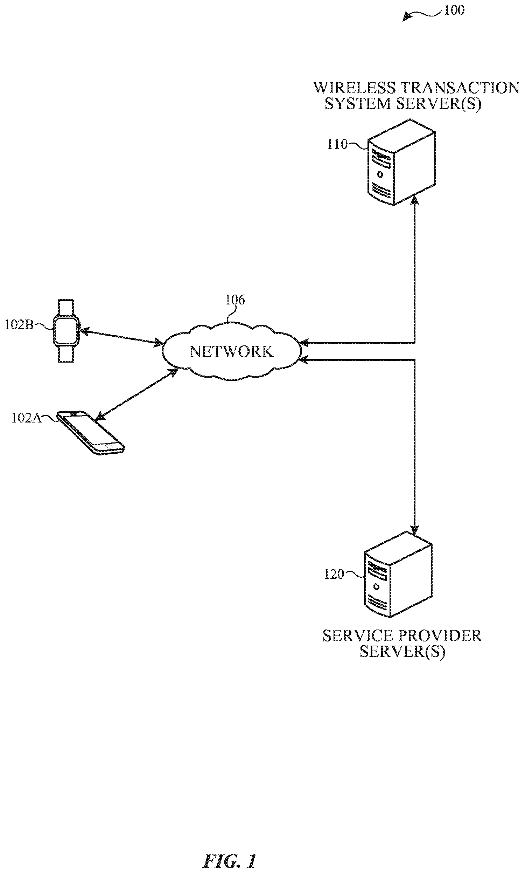

FIG. 1 illustrates an example network environment 100 in which a system for notification based provisioning of card accounts may be implemented in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The network environment 100 includes one or more electronic devices, e.g., electronic devices 102A-B, a network 106, one or more wireless transaction system servers 110, and one or more service provider servers 120. The network 106 may communicatively couple, for example, one or more of the electronic devices 102A-B to the one or more wireless transaction system servers 110 and/or the one or more service provider servers 120, and the one or more wireless transaction system servers 110 to the one or more service provider servers 120. In one or more implementations, the network 106 may be an interconnected network of devices that may include, or may be communicatively coupled to, the Internet.

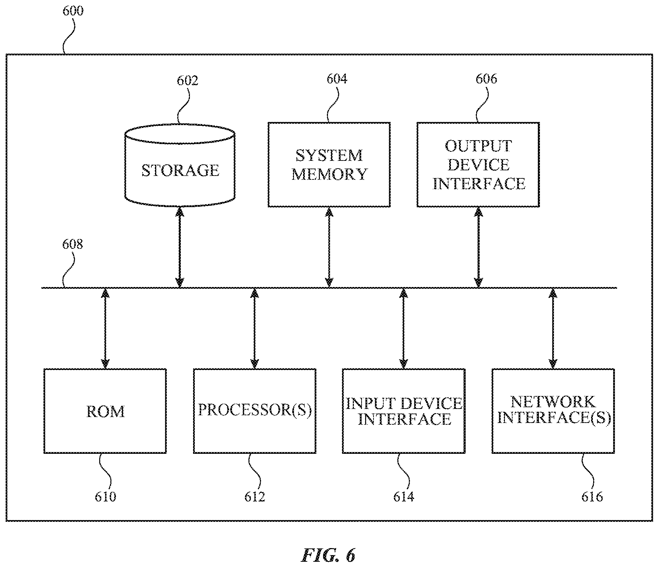

The one or more wireless transaction system servers 110 may include one or more servers that facilitate providing a wireless transaction system, such as a mobile payment system, to the electronic devices 102A-B. The one or more wireless transaction system servers 110 may include one or more trusted services manager (TSM) servers, one or more broker servers, one or more application servers, and/or generally any servers that may facilitate providing a wireless transaction system. In one or more implementations, an authorized user of one or more of the electronic devices 102A-B may have a user account with the wireless transaction system. The user account may be used, among other things, to manage the various card accounts and/or credentials that the user has registered with the wireless transaction system, e.g., via the one or more wireless transaction system servers 110. The one or more wireless transaction system servers 110 may be, and/or may include all or part of, the electronic system discussed below with respect to FIG. 6. For explanatory purposes, the one or more wireless transaction system servers 110 are generally described herein with reference to a single wireless transaction system server 110. However, the one or more wireless transaction system servers 110 may include multiple servers that may correspond to one or more wireless transaction systems, such as multiple different mobile payment systems.

The one or more service provider servers 120 may include one or more server devices that may facilitate a service being provided with respect to a card account of the user, such as a credit card service, a debit card service, a loyalty card service, an online content service, such as an online music service, a transit service, a membership service, and the like. In one or more implementations, the one or more service provider servers 120 may include one or more servers corresponding to one or more financial institutions, such as financial institutions that issue credit and/or debit cards. The one or more service provider servers 120 may include any/all of one or more TSM servers, one or more broker servers, one or more application servers, and/or generally any servers that may facilitate providing a service and/or utilizing wireless transactions for the service. In one or more implementations, an authorized user of the electronic device 102A may have a user account with one or more service providers associated with the one or more service provider servers 120. The one or more service provider servers 120 may be, and/or may include all or part of, the electronic system discussed below with respect to FIG. 6. For explanatory purposes, the one or more service provider servers 120 are generally described herein with reference to a single service provider server 120. However, the one or more service provider servers 120 may include multiple servers that correspond to one or more service providers, such as multiple different credit card account providers.

One or more of the electronic devices 102A-B may be, for example, a portable computing device such as a laptop computer, a smartphone, a peripheral device (e.g., digital camera, headphones), a tablet device, a wearable device (e.g., watch, band, etc.), or other appropriate devices that include one or more wireless interfaces, such as one or more NFC radios, WLAN radios, Bluetooth radios, Zigbee radios, cellular radios, and/or other wireless radios. In FIG. 1, by way of example, the electronic device 102A is depicted as a mobile device and the electronic device 102B is depicted as a smartwatch.

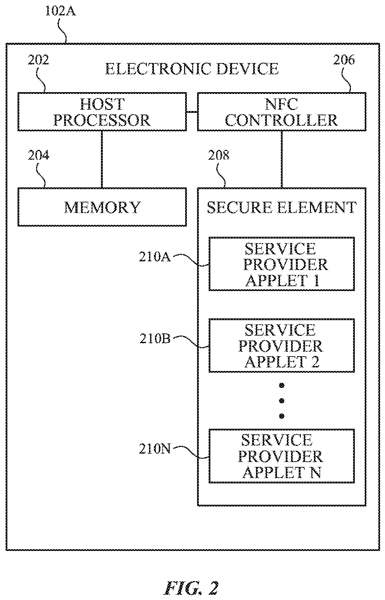

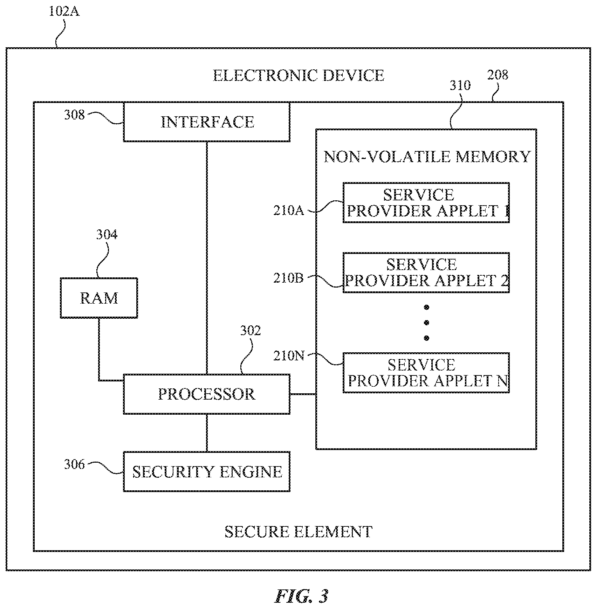

In one or more implementations, the electronic devices 102A-B may each include a secure element onto which one or more applets (e.g., representing one or more payment credentials) corresponding to, for example, card accounts of the user, may be provisioned. An example electronic device that includes a secure element is discussed further below with respect to FIG. 2, and an example secure element is discussed further below with respect to FIG. 3. One or more of the electronic devices 102A-B may be, and/or may include all or part of, the electronic system discussed below with respect to FIG. 6.

In order to have an applet corresponding to a card account with a given service provider provisioned onto a secure element of one or more of the electronic devices 102A-B, such as the electronic device 102A, a user of the electronic device 102A may access an application running on the electronic device 102A to input information regarding the card account, such as any/all of an account number, a picture of the corresponding physical card, a name, a security code, and the like. After entering the information, the one or more of the service provider servers 120 and/or the one or more wireless transaction system servers 110, such as a TSM server and/or a broker server, may cause the applet corresponding to the card account to be provisioned on a secure element of the electronic device 102A, such as by transmitting a provisioning script to be executed by the secure element of the electronic device 102A. The secure element may execute the provisioning script and provision the applet corresponding to the card account on the secure element of the electronic device 102A.

In the subject system, the one or more wireless transaction system servers 110 automatically receive indications of card accounts of the user, e.g. without the user having to input information regarding the card accounts. The one or more wireless transaction system servers 110 determine whether a card account is eligible to have a corresponding applet provisioned on the secure element of one or more of the electronic devices 102A-B of the user, such as the electronic device 102A, and, if so, transmit a notification to the one or more electronic devices (e.g., electronic device 102A) indicating the same. For example, the notification may proactively notify the user that they have a card account (a card on file ("CoF")) that is eligible to be added to the electronic device 102A for use in one or more wireless transaction systems. In some embodiments, a CoF can be detected through any association with a user account. For example, a user can associate a payment card with a particular service that is linked to a user account, such as a media streaming service or an application service. The payment card can then be detected as a CoF associated with the user, which can trigger a notification of a CoF that is eligible to be provisioned to one or more electronic devices associated with the user account. Similarly, provisioning a card account on one electronic device associated with the user account can trigger a notification of a CoF that is eligible to be provisioned on one or more other electronic devices that also are associated with the user account.

The notification may be, for example, a notification message, such as a notification message displayed on a homescreen of the electronic device 102A or displayed within an application corresponding to the wireless transaction system, and/or the notification may be a text message, or any other form of message or notification. In one or more implementations, the notification may include a response mechanism, such as a selectable element, that allows the user to approve adding the card account to the electronic device 102A, e.g., for use in one or more wireless transaction systems. If the one or more wireless transaction system servers 110 receive an indication (directly or indirectly) that approves adding the card account to the electronic device 102A, the one or more wireless transaction system servers 110 initiate provisioning the applet corresponding to the card account on the secure element of the electronic device 102A.

If the one or more wireless transaction system servers 110 receive an indication disapproving (or declining) adding the card account to the wireless transaction system and/or there has been no response to the notification for a predetermined amount of time, the one or more wireless transaction system servers 110 store an indication that the user disapproved or did not respond to the notification to add the card account to the electronic device 102A for use in the wireless transaction system. The one or more wireless transaction system servers 110 may not notify the user again for a predetermined amount of time with respect to adding the card account to the electronic device 102A for use in the wireless transaction system.

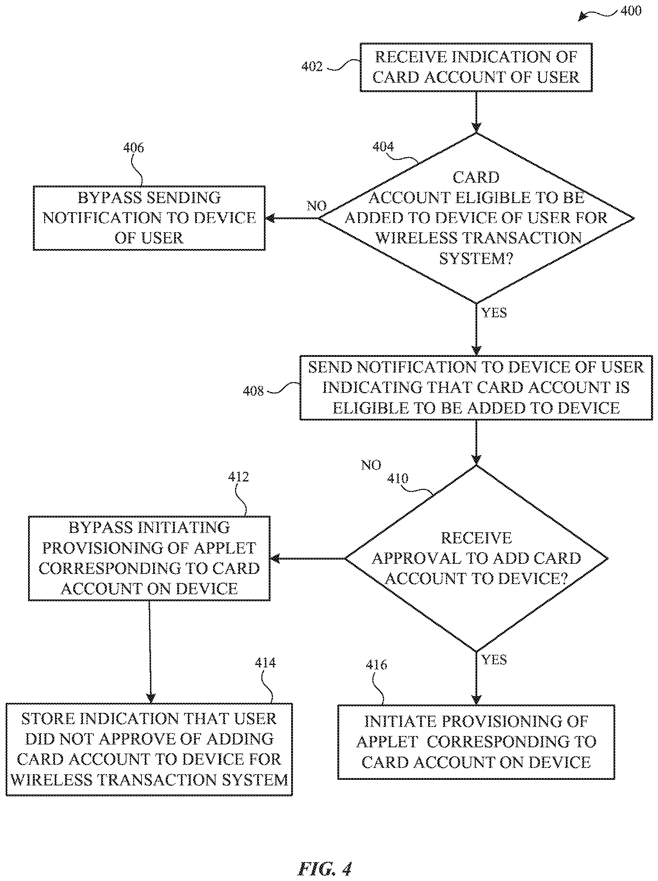

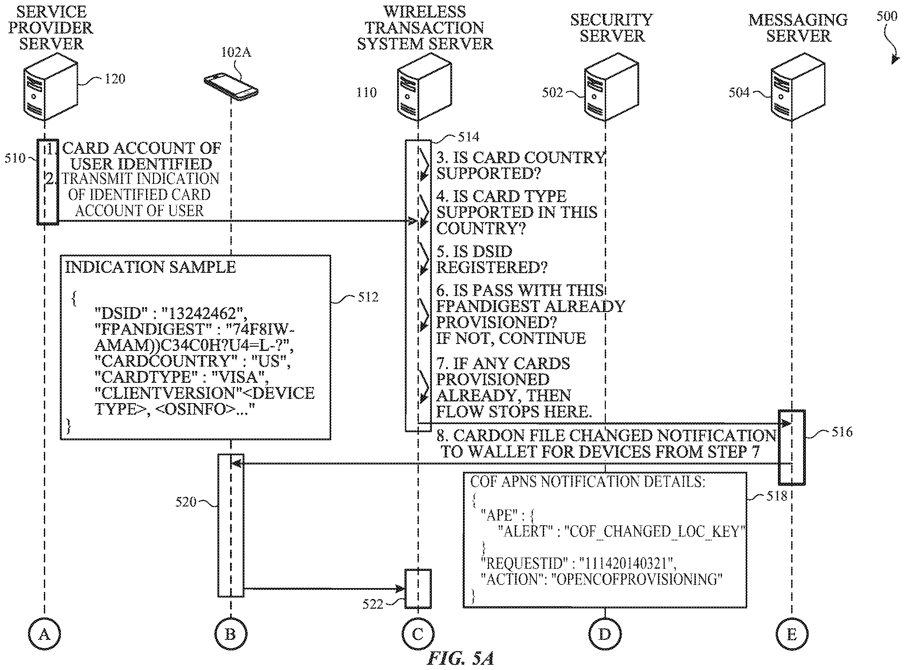

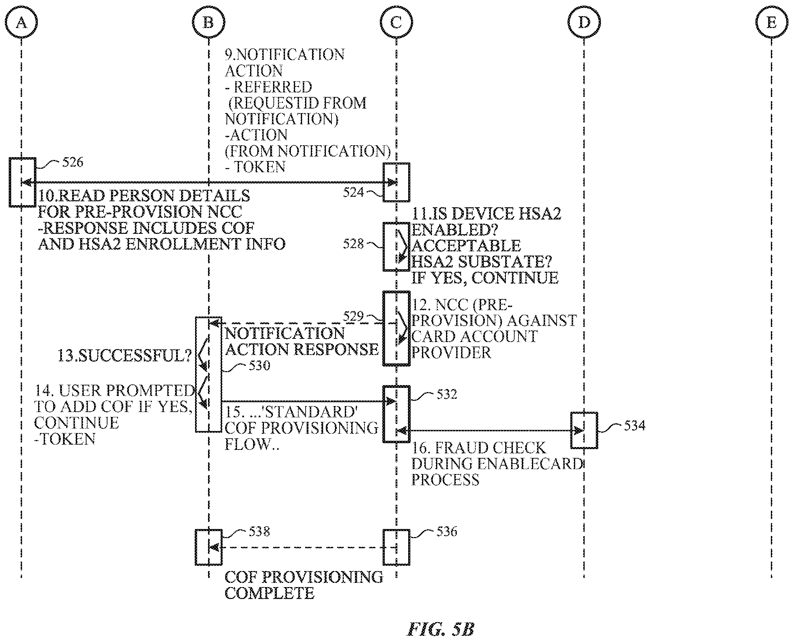

Once an applet has been provisioned on the secure element of the electronic device 102A for a given card account, the user may use the electronic device 102A for a wireless transaction using the card account, such as a wireless payment transaction with a wireless transaction terminal. An example process for notification based provisioning of card accounts is discussed further below with respect to FIG. 4, and an example process flow for notification based provisioning of card accounts is discussed further below with respect to FIGs. 5A-B.

FIG. 2 illustrates an example electronic device 102A that may be used in system for notification based provisioning of card accounts in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided. In one or more implementations, one or more components of the electronic device 102A may be implemented by the electronic device 102B.

The electronic device 102A may include a host processor 202, a memory 204, an NFC controller 206, and a secure element 208. The secure element 208 may include one or more interfaces for communicatively coupling (directly or indirectly) to the NFC controller 206 and/or the host processor 202, such as via one or more single wire protocol (SWP) connections and/or any other data connection. The secure element 208 may include one or more provisioned service provider applets 210A-N, which may be referred to herein as applets 212A-N that may correspond to different service providers. In one or more implementations, the operating system and/or execution environment of the secure element 208 may be a JAVA-based operating system and/or JAVA-based execution environment, and the applets 210A-N may be JAVA-based applets. In other implementations, other operating systems, languages, and/or environments can be implemented. In addition to the one or more applets 210A-N, the secure element 208 may also include one or more additional applets for performing other operations, such as a security applet, a registry applet, and the like.

The applets 210A-N may be provisioned on the secure element 208 in part by, for example, a trusted services manager server and/or a broker server, such as of the one or more wireless transaction system servers 110 and/or the one or more service provider servers 120. For example, the trusted services manager server and/or the broker server may transmit a provisioning script to the electronic device 102A via the network 106. In some implementations, the host processor 202 of the electronic device 102A may receive the script and may provide the script to the secure element 208, such as via the NFC controller 206 and/or directly to the secure element 208. The secure element 208 may perform one or more security mechanisms to verify the received script, such as one or more security mechanisms inherent in the GlobalPlatform framework, and may then execute the received script.

The execution of the script by the secure element 208 may cause one or more of the applets 210A-N to be provisioned on the secure element 208. Each of the applets 210AN may be provisioned with one or more of: an applet identifier, a device primary account number (DPAN), an identifier of the associated service provider, and/or one or more attributes. The applet identifier associated with a given applet 210A may be used by, for example, the host processor 202 and/or the trusted services manager server to uniquely identify the applet 210A relative to the other applets 210A-N provisioned on the secure element 208, such as to perform one or more operations with respect to the applet 210A. In one or more implementations, the applet identifiers may be used by the host processor 202 to store associations between the applets 210A-N and the corresponding service providers.

The DPAN may be associated with a card account, such as a credit card account, that is associated with a given applet 210A. In contrast to the DPAN, the actual number that is printed on the physical card may be referred to as a funding primary account number (FPAN). When conducting a wireless payment transaction using one of the applets 210A-N, the secure element 208 may provide the DPAN to a wireless transaction terminal (e.g., without providing the FPAN which may not be stored on the secure element 208). The wireless transaction terminal may then forward the DPAN to the associated service provider who can determine the account (e.g., the FPAN) associated with the DPAN, and confirm that the account contains sufficient funds and/or credit to complete the wireless payment transaction.

In one or more implementations, the applets 210A-N may also be provisioned with an attribute that indicates the type of communication protocol used by the applets 210AN to communicate with a wireless transaction terminal. The types of communication protocols may include, for example, an NFC-A protocol, an NFC-B protocol, an NFC-F protocol, a Bluetooth protocol, a Bluetooth low energy (BLE) protocol, a Zigbee protocol, a Wi-Fi protocol, or generally any communication protocol.

The NFC controller 206 may include one or more antennas and one or more transceivers for transmitting/receiving NFC communications. The NFC controller 206 may further include one or more interfaces, such as a single wire protocol interface, for coupling to the host processor 202 and/or the secure element 208. The NFC controller 206 may be able to communicate via one or more different NFC communication protocols, such as NFC-A (or Type A), NFC-B (or Type B), NFC-F (or Type F or FeliCA), and/or International Organization for Standardization (ISO)/International Electrotechnical Commission (IEC) 15693. The NFC-A protocol may be based on ISO/IEC 14443A and may use Miller bit coding with a 100 percent amplitude modulation. The NFC-B protocol may be based on ISO/IEC 14443B and may use variations of Manchester encoding along with a 10 percent modulation. The NFC-F protocol may be based on FeliCA JIS X6319-4 and may use a slightly different variation of Manchester coding than the NFC-B protocol.

For explanatory purposes, the electronic device 102A is illustrated in FIG. 2 as utilizing the NFC controller 206 to communicate with a wireless transaction terminal. However, the electronic device 102A may use any wireless communication controller and/or protocol to communicate with a wireless transaction terminal, such as Bluetooth, Bluetooth low energy, Wi-Fi, Zigbee, millimeter wave (mmWave), or generally any wireless communication controller and/or protocol.

The host processor 202 may include suitable logic, circuitry, and/or code that enable processing data and/or controlling operations of the electronic device 102A. In this regard, the host processor 202 may be enabled to provide control signals to various other components of the electronic device 102A. The host processor 202 may also control transfers of data between various portions of the electronic device 102A. Additionally, the host processor 202 may enable implementation of an operating system or otherwise execute code to manage operations of the electronic device 102A. The memory 204 may include suitable logic, circuitry, and/or code that enable storage of various types of information such as received data, generated data, code, and/or configuration information. The memory 204 may include, for example, random access memory (RAM), read-only memory (ROM), flash, and/or magnetic storage.

In one or more implementations, one or more of the host processor 202, the memory 204, the NFC controller 206, the secure element 208, and/or one or more portions thereof, may be implemented in software (e.g., subroutines and code), may be implemented in hardware (e.g., an Application Specific Integrated Circuit (ASIC), a Field Programmable Gate Array (FPGA), a Programmable Logic Device (PLD), a controller, a state machine, gated logic, discrete hardware components, or any other suitable devices) and/or a combination of both.

FIG. 3 illustrates an example electronic device 102A including an example secure element 208 that may be used in a system for notification based provisioning of card accounts in accordance with one or more implementations. Not all of the depicted components may be used in all implementations, however, and one or more implementations may include additional or different components than those shown in the figure. Variations in the arrangement and type of the components may be made without departing from the spirit or scope of the claims as set forth herein. Additional components, different components, or fewer components may be provided.

The secure element 208 includes a secure processor 302, RAM 304, a security engine 306, an interface 308, and non-volatile memory 310. The RAM 304 may include one or more of static RAM (SRAM), and/or dynamic RAM (DRAM). The interface 308 may communicatively couple the security element 208 to one or more other chips in the device, such as the NFC controller 206 and/or the host processor 202. The interface 308 may be, for example, a SWP interface, a universal serial bus (USB) interface, or generally any data interface. The secure processor 302 may be, for example, a reduced instruction set computing (RISC) processor, an advanced RISC machine (ARM) processor, or generally any processing circuitry.

The security engine 306 may perform one or more security operations for the secure element 208. For example, the security engine 306 may perform cryptographic operations and/or may manage cryptographic keys and/or certificates. In one or more implementations, the communications between the secure element 208 and an external device, such as a wireless transaction terminal and/or a trusted services manager server may be encrypted, and therefore the content of such communications may be inaccessible to the NFC controller 206. For example, for NFC-F communications, an encryption key may be dynamically generated each time mutual authentication is performed. In these one or more implementations, the encryption/decryption and/or key generation/management may be performed all or in part by the security engine 306.

The non-volatile memory 310 may be and/or may include, for example, flash memory. The non-volatile memory 310 may store the attributes and executable code associated with the applets 210A-N. In one or more implementations, the non-volatile memory 310 may also store firmware and/or operating system executable code that is executed by the secure processor 302 to provide the execution environment for the applets 210A-N, such as a JAVA execution environment.

In one or more implementations, one or more of the secure processor 302, the RAM 304, the security engine 306, the interface 308, the non-volatile memory 310, and/or one or more portions thereof, may be implemented in software (e.g., subroutines and code), may be implemented in hardware (e.g., an ASIC, an FPGA, a PLD, a controller, a state machine, gated logic, discrete hardware components, or any other suitable devices) and/or a combination of both.

FIG. 4 illustrates a flow diagram of an example process 400 for notification based provisioning of card accounts in accordance with one or more implementations. For explanatory purposes, the process 400 is primarily described herein with reference to the electronic device 102A and the one or more wireless transaction system servers 110 of FIG. 1. However, the process 400 is not limited to the electronic device 102A and/or the one or more wireless transaction system servers 110 of FIG. 1, and one or more blocks (or operations) of the process 400 may be performed by one or more other components or chips of the electronic device 102A and/or of the one or more wireless transaction system servers 110. The electronic device 102A also is presented as an exemplary device and the operations described herein may be performed by any suitable device, such as the electronic device 102B. Further for explanatory purposes, the operations (or blocks) of the process 400 are described herein as occurring in serial, or linearly. However, multiple operations of the process 400 may occur in parallel. In addition, the operations of the process 400 need not be performed in the order shown and/or one or more operations of the process 400 need not be performed and/or can be replaced by other operations.

The process 400 is initiated when the wireless transaction system server 110 receives an indication of a card account associated with a user (402). The indication may be received, for example, from a service provider server 120. For example, a card account may be registered for use with the service provider server 120, and/or a card account may be established as a default payment method for the service provider server 120, and the service provider server 120 may send an indication of the same to the wireless transaction system server 110. In one or more implementations, the service provider server 120 may transmit the notification to the wireless transaction system server 110 when the service provider server 120 and the wireless transaction system server 110 are associated with a same entity, when the user uses an electronic device 102A to register the card account for use with the service provider server 120, and/or when the user of the electronic device 102A implicitly or explicitly links their accounts with the service provider server 120 and/or the wireless transaction system server 110 (and/or has an account that is shared between the service provider server 120 and the wireless transaction system server 110).

In one or more implementations, the electronic device 102A may be used to conduct a wireless payment transaction with the wireless transaction system using a wireless payment terminal at a physical location associated with the service provider server 120, such as a restaurant or store. The service provider server 120 may determine that the user of electronic device 102A has a user account with the service provider, such as a loyalty card account with a store or restaurant, and the service provider server 120 may transmit an indication of the same to the wireless transaction system server 110. In one or more implementations, the service provider server 120 may transmit the notification to the wireless transaction system server 110 responsive to the service provider server 120 provisioning an applet corresponding to a card account of the user on another electronic device 102B of the user. In one or more implementations, the service provider server 120 may transmit the indication to the wireless transaction system server 110 responsive to the user installing an application corresponding to the service provider server 120 on the electronic device 102A.

The wireless transaction system server 110 verifies whether the card account is eligible to be added to the electronic device 102A for use in the wireless transaction system (404). For example, the wireless transaction system server 110 may determine whether the service provider associated with the card account supports the wireless transaction system and/or whether the service provider supports provisioning an applet on the secure element 208 of the electronic device 102A. In one or more implementations, the wireless transaction system server 110 may determine whether the electronic device 102A satisfies one or more security requirements associated with the wireless transaction system. For example, the wireless transaction system may require that the electronic device 102A implement two-factor authentication and/or other security mechanisms. The determination as to whether the card account is eligible to be added to the electronic device 102A for the wireless transaction system is discussed further below with respect to FIGs. 5A-B.

If the wireless transaction system server 110 determines that the card account is not eligible to be added to the electronic device 102A for the wireless transaction system (404), the wireless transaction system server 110 bypasses sending a notification to the electronic device 102A (406). In this manner, the wireless transaction system server 110 can avoid sending unnecessary notifications to the electronic device 102A of the user that may bother the user and/or unnecessarily consume resources of the electronic device 102A, such as bandwidth resources, processing resources, and the like.

If the wireless transaction system server 110 determines that the card account is eligible to be added to the electronic device 102A (404), the wireless transaction system server 110 sends a notification to the electronic device 102A that notifies the user that the card account is eligible to be added to the electronic device 102A, e.g., for use in the wireless transaction system (408). The notification message may be transmitted, for example, as text message, a homescreen notification, a notification within an application corresponding to the wireless transaction system, and/or any other form of messaging. In some implementations, a notification may be sent to multiple electronic devices associated with the user (e.g., linked to a common user account) on which the card account can be added.

In one or more implementations, the notification may include a selectable element, such as a link or virtual control, that the user may select to approve adding the card account to the electronic device 102A. In one or more implementations, the notification may include multiple selectable elements, such as a first (virtual) button to approve adding the card account and a second (virtual) button to disapprove/decline adding the card account. In one or more implementations, the user may respond to the notification, such as with a text message, to indicate whether they approve (e.g., a text message of "yes"), or disapprove (e.g., a text message "no") of adding the card account. In one or more implementations, the user may respond to the notification using a spoken command, or any other form of providing input.

If the user approves of adding the card account, such as by selecting the selectable element, an indication of the selection may be transmitted to the wireless transaction system server 110. If the wireless transaction system server 110 receives the indication of the selection (410), the wireless transaction system server 110 initiates provisioning an applet corresponding to the card account on the electronic device 102A to effectuate adding the card account to the electronic device 102A, e.g., for use in the wireless transaction system (416). It is noted that a provisioned card account may be used in any/all wireless transaction systems in which it is accepted / recognized. An example of initiating the provisioning of an applet on the electronic device 102A is discussed further below with respect to FIGs. 5A-B.

If the wireless transaction system server 110 does not receive the indication of approval regarding adding the card account after a predetermined period of time elapses, or if the wireless transaction system server 110 receives a disapproval / decline indication regarding adding the card account (410), the wireless transaction system server 110 bypasses initiating the provisioning of the applet corresponding to the card account on the electronic device 102A (412). The wireless transaction system server 110 may also store an indication of the disapproval / decline regarding adding the card account to the electronic device 102A (414). The wireless transaction system server 110 may wait a predetermined amount of time before sending another notification regarding adding the card account to the electronic device 102A. In one or more implementations, if addition of the card account was declined / disapproved, e.g., a predetermined number of times, the wireless transaction system server 110 may not send another notification regarding adding the card account to the electronic device 102A. In some implementations, upon receiving a disapproval to add a card, the wireless transaction system server 110 also may not send a notification to add another card account, e.g., for another card of the same type or class, from the same issuer, and/or associated with the same system, for a predetermined period of time or until a predetermined condition is detected.

In one or more implementations, the wireless transaction system server 110 may repeat (404)-(416) for any additional electronic devices associated with the user, such as the electronic device 102B. For example, the electronic devices 102A-B may be registered to a user account associated with the user, such as via a cloud-based device management system that may be associated with the wireless transaction system and/or the wireless transaction system server 110, and/or the wireless transaction system server 110 may receive an indication of the electronic devices 102A-B that are registered to the user.

FIGs. 5A-B illustrate an example process flow 500 in a system for notification based provisioning of card accounts in accordance with one or more implementations. For explanatory purposes, the process flow 500 is primarily described herein with reference to the wireless transaction system server 110 and the electronic device 102A of FIG. 1. However, the process flow 500 is not limited to the wireless transaction system server 110 or the electronic device 102A, and one or more blocks (or operations) of the process flow 500 may be performed by one or more other components or chips of the electronic device 102A. The electronic device 102A also is presented as an exemplary device and the operations described herein may be performed by any suitable device, such as the electronic device 102B. Further for explanatory purposes, the operations of the process flow 500 are described herein as occurring in serial, or linearly. However, multiple operations of the process flow 500 may occur in parallel. In addition, the operations of the process flow 500 need not be performed in the order shown and/or one or more operations of the process flow 500 need not be performed and/or can be replaced by other operations.

The process flow 500 includes the service provider server 120, the electronic device 102A, the wireless transaction system server 110, a security server 502 and a messaging server 504. In one or more implementations, the operations of the process flow 500 that are performed by the electronic device 102A may be performed by an application running on the electronic device 102A that is associated with the wireless transaction system, such as a wallet or payment application.

The process flow 500 begins with the service provider server 120 identifying a card account of a user, and transmitting an indication 512 of the identified card account to the wireless transaction system server 110 (510). For example, the electronic device 102A may be used to provide a credit card account to the service provider server 120 to be used as a payment method with the service provider server 120, such as a registered or default payment method.

In one or more implementations, the user's account with the service provider server 120 may be implicitly or explicitly linked or associated with the user's account with the wireless transaction system server 110. For example, in one or more implementations the user may use the same account to access both the service provider server 120 and the wireless transaction system server 110. However, a card account registered with the service provider server 120 may not be accessible for use with the wireless transaction system until an applet corresponding to the card account is provisioned on the electronic device 102A.

In one or more implementations, the indication 512 of the identified card account may include an identifier of the user, such as any/all of the "dsid" in FIG. 5A, a hash of the FPAN, which may be the card account number printed on the physical card, an identifier of the country in which the card account was issued, an indication of the type of card account, and device information associated with the electronic device 102A from which the card account was provided to the service provider server 120.

The wireless transaction system server 110 may receive the indication 512 from the service provider server 120 and may perform one or more card eligibility checks to verify that the card account is eligible to be added to the electronic device 102A, e.g., for use in the wireless transaction system or systems (514). The eligibility checks may include, for example, checking whether the country in which the card account was issued is supported by the wireless transaction system, checking whether the card type is supported by the wireless transaction system (e.g. checking whether the service provider server 120 supports the wireless transaction system), checking whether the user's account is registered with the wireless transaction system, and/or checking whether an applet corresponding to the card account has already been provisioned on the secure element 208 of the electronic device 102A, e.g., for use in the wireless transaction system. If one or more of the eligibility checks fails, the wireless transaction system server 110 may not notify the user of the card account. In one or more implementations, if there are any applets or any applets of the same type/class provisioned on the secure element 208 of the electronic device 102A, the wireless transaction system may not notify the user of the card account.

If the card eligibility checks all pass, the wireless transaction system server 110 transmits a notification to a messaging server 504 for communication to the electronic device 102A (514). In one or more implementations, the messaging server 504 may be a server that is used by the wireless transaction system to communicate with the electronic devices 102A-B and/or to communicate with the secure element 208 on the electronic devices 102A-B. The messaging server 504 may receive the notification, and may transmit a corresponding notification 518 to the electronic device 102A (516). The notification 518 may include an indication that the card account may be provisioned on the secure element 208 of the electronic device 102A as well as an identifier to uniquely identify the notification 518. The unique identifier, e.g. a request identifier, may be used to associate the provisioning of the card on the electronic device 102A to the notification that is being acted on.

The notification 518 may be received by the electronic device 102A, and the electronic device 102A may respond directly to the wireless transaction system server 110 with a message that includes the identifier of the notification 518 as well as a security token that may be used to access information regarding the user and/or the card account (520). The wireless transaction system server 110 may receive the security token (522) and may use the security token to request information from the service provider server 120 regarding the card account and/or regarding whether one or more security mechanisms are implemented by the electronic device 102A (524). The service provider server 120 may respond with the requested information (526).

The wireless transaction system server 110 may determine, based on the information received from the electronic device 102A, whether one or more security mechanisms are implemented by the electronic device 102A, such as two-factor authentication, and/or whether the current authentication level of the electronic device 102A meets a minimum authentication level for provisioning an applet on the secure element 208 of the electronic device 102A (528). If the electronic device 102A is implementing the appropriate security mechanisms (528), the wireless transaction system server 110 performs a network card check with the card account provider to perform pre-provisioning with respect to the card account, and the wireless transaction system server 110 transmits a notification message to the electronic device 102A indicating that the card account is available to be added to the wireless transaction system (529).

In one or more implementations, the notification message may include a selectable element that allows the user to indicate their approval of adding the card account to the wireless transaction system. If the user indicates their approval, the electronic device 102A may generate a new security token (which may require the user to authenticate with the electronic device 102A), and the electronic device 102A transmits the security token to the wireless transaction system server 110 (530). The wireless transaction system server 110 may then initiate provisioning of an applet corresponding to the card account on the secure element 208 of the electronic device 102A, e.g., for use in the wireless transaction system (532). The provisioning may include performing a security check, such as a fraud check, with the security server 502 (534). For example, the wireless transaction system server 110 may confirm, via the security server 502, that the user is authorized to use the card account.

In one or more implementations, the wireless transaction system server 110 may initiate the provisioning by instructing the service provider server 120 to generate a set of commands for provisioning an applet corresponding to the card account on the secure element 208 of the electronic device 102A. The service provider server 120 may transmit the set of commands directly to the secure element 208 of the electronic device 102A, and/or the service provider server 120 may transmit the set of commands to the wireless transaction system server 110 for transmission to the secure element 208 of the electronic device 102A. The secure element 208 of the electronic device 102A may execute the commands to cause the applet to be provisioned on the secure element 208 of the electronic device 102A.

Once the provisioning process is complete, the wireless transaction system server 110 transmits an indication of the same to the electronic device 102A (536). The electronic device 102A may receive the indication and, responsive thereto, the electronic device 102A may cause a representation of the card account to appear in an application associated with the wireless transaction system, such as a wallet application (538). The user may then be able to select the card account in the wallet or payment application to perform wireless transactions, e.g., in one or more wireless transaction systems using the card account. The wireless transactions can be any/all of payment transactions, reward transactions, redemption transactions, identity/access transactions, validation transactions, etc.

FIG. 6 conceptually illustrates an electronic system 600 with which one or more implementations of the subject technology may be implemented. The electronic system 600 can be, and/or can be a part of, one or more of the electronic devices 102A-B, and/or one or more of the servers 110, 120 shown in FIG. 1. The electronic system 600 may include various types of computer readable media and interfaces for various other types of computer readable media. The electronic system 600 includes a bus 608, one or more processing unit(s) 612, a system memory 604 (and/or buffer), a ROM 610, a permanent storage device 602, an input device interface 614, an output device interface 606, and one or more network interfaces 616, or subsets and variations thereof.

The bus 608 collectively represents all system, peripheral, and chipset buses that communicatively connect the numerous internal devices of the electronic system 600. In one or more implementations, the bus 608 communicatively connects the one or more processing unit(s) 612 with the ROM 610, the system memory 604, and the permanent storage device 602. From these various memory units, the one or more processing unit(s) 612 retrieves instructions to execute and data to process in order to execute the processes of the subject disclosure. The one or more processing unit(s) 612 can be a single processor or a multi-core processor in different implementations.

The ROM 610 stores static data and instructions that are needed by the one or more processing unit(s) 612 and other modules of the electronic system 600. The permanent storage device 602, on the other hand, may be a read-and-write memory device. The permanent storage device 602 may be a non-volatile memory unit that stores instructions and data even when the electronic system 600 is off. In one or more implementations, a mass-storage device (such as a magnetic or optical disk and its corresponding disk drive) may be used as the permanent storage device 602.

In one or more implementations, a removable storage device (such as a floppy disk, flash drive, and its corresponding disk drive) may be used as the permanent storage device 602. Like the permanent storage device 602, the system memory 604 may be a read-and-write memory device. However, unlike the permanent storage device 602, the system memory 604 may be a volatile read-and-write memory, such as random access memory. The system memory 604 may store any of the instructions and data that one or more processing unit(s) 612 may need at runtime. In one or more implementations, the processes of the subject disclosure are stored in the system memory 604, the permanent storage device 602, and/or the ROM 610. From these various memory units, the one or more processing unit(s) 612 retrieves instructions to execute and data to process in order to execute the processes of one or more implementations.

The bus 608 also connects to the input and output device interfaces 614 and 606. The input device interface 614 enables a user to communicate information and select commands to the electronic system 600. Input devices that may be used with the input device interface 614 may include, for example, alphanumeric keyboards and pointing devices (also called "cursor control devices"). The output device interface 606 may enable, for example, the display of images generated by electronic system 600. Output devices that may be used with the output device interface 606 may include, for example, printers and display devices, such as a liquid crystal display (LCD), a light emitting diode (LED) display, an organic light emitting diode (OLED) display, a flexible display, a flat panel display, a solid state display, a projector, or any other device for outputting information. One or more implementations may include devices that function as both input and output devices, such as a touchscreen. In these implementations, feedback provided to the user can be any form of sensory feedback, such as visual feedback, auditory feedback, or tactile feedback; and input from the user can be received in any form, including acoustic, speech, or tactile input.

Finally, as shown in FIG. 6, the bus 608 also couples the electronic system 600 to one or more networks and/or to one or more network nodes through the one or more network interface(s) 616. In this manner, the electronic system 600 can be a part of a network of computers (such as a LAN, a wide area network ("WAN"), or an Intranet, or a network of networks, such as the Internet. Any or all components of the electronic system 600 can be used in conjunction with the subject disclosure.

Implementations within the scope of the present disclosure can be partially or entirely realized using a tangible computer-readable storage medium (or multiple tangible computer-readable storage media of one or more types) encoding one or more instructions. The tangible computer-readable storage medium also can be non-transitory in nature.

The computer-readable storage medium can be any storage medium that can be read, written, or otherwise accessed by a general purpose or special purpose computing device, including any processing electronics and/or processing circuitry capable of executing instructions. For example, without limitation, the computer-readable medium can include any volatile semiconductor memory, such as RAM, DRAM, SRAM, T-RAM, Z-RAM, and TTRAM. The computer-readable medium also can include any non-volatile semiconductor memory, such as ROM, PROM, EPROM, EEPROM, NVRAM, flash, nvSRAM, FeRAM, FeTRAM, MRAM, PRAM, CBRAM, SONOS, RRAM, NRAM, racetrack memory, FJG, and Millipede memory.

Further, the computer-readable storage medium can include any non-semiconductor memory, such as optical disk storage, magnetic disk storage, magnetic tape, other magnetic storage devices, or any other medium capable of storing one or more instructions. In one or more implementations, the tangible computer-readable storage medium can be directly coupled to a computing device, while in other implementations, the tangible computer-readable storage medium can be indirectly coupled to a computing device, e.g., via one or more wired connections, one or more wireless connections, or any combination thereof.

Instructions can be directly executable or can be used to develop executable instructions. For example, instructions can be realized as executable or non-executable machine code or as instructions in a high-level language that can be compiled to produce executable or non-executable machine code. Further, instructions also can be realized as or can include data. Computer-executable instructions also can be organized in any format, including routines, subroutines, programs, data structures, objects, modules, applications, applets, functions, etc. As recognized by those of skill in the art, details including, but not limited to, the number, structure, sequence, and organization of instructions can vary significantly without varying the underlying logic, function, processing, and output.

While the above discussion primarily refers to microprocessor or multi-core processors that execute software, one or more implementations are performed by one or more integrated circuits, such as ASICs or FPGAs. In one or more implementations, such integrated circuits execute instructions that are stored on the circuit itself.

Those of skill in the art would appreciate that the various illustrative blocks, modules, elements, components, methods, and algorithms described herein may be implemented as electronic hardware, computer software, or combinations of both. To illustrate this interchangeability of hardware and software, various illustrative blocks, modules, elements, components, methods, and algorithms have been described above generally in terms of their functionality. Whether such functionality is implemented as hardware or software depends upon the particular application and design constraints imposed on the overall system. Skilled artisans may implement the described functionality in varying ways for each particular application. Various components and blocks may be arranged differently (e.g., arranged in a different order, or partitioned in a different way) all without departing from the scope of the subject technology.

It is understood that any specific order or hierarchy of blocks in the processes disclosed is an illustration of example approaches. Based upon design preferences, it is understood that the specific order or hierarchy of blocks in the processes may be rearranged, or that all illustrated blocks be performed. Any of the blocks may be performed simultaneously. In one or more implementations, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

As used in this specification and any claims of this application, the terms "base station", "receiver", "computer", "server", "processor", and "memory" all refer to electronic or other technological devices. These terms exclude people or groups of people. For the purposes of the specification, the terms "display" or "displaying" means displaying on an electronic device.

As used herein, the phrase "at least one of" preceding a series of items, with the term "and" or "or" to separate any of the items, modifies the list as a whole, rather than each member of the list (i.e., each item). The phrase "at least one of" does not require selection of at least one of each item listed; rather, the phrase allows a meaning that includes at least one of any one of the items, and/or at least one of any combination of the items, and/or at least one of each of the items. By way of example, the phrases "at least one of A, B, and C" or "at least one of A, B, or C" each refer to only A, only B, or only C; any combination of A, B, and C; and/or at least one of each of A, B, and C.

The predicate words "configured to", "operable to", and "programmed to" do not imply any particular tangible or intangible modification of a subject, but, rather, are intended to be used interchangeably. In one or more implementations, a processor configured to monitor and control an operation or a component may also mean the processor being programmed to monitor and control the operation or the processor being operable to monitor and control the operation. Likewise, a processor configured to execute code can be construed as a processor programmed to execute code or operable to execute code.

Phrases such as an aspect, the aspect, another aspect, some aspects, one or more aspects, an implementation, the implementation, another implementation, some implementations, one or more implementations, an embodiment, the embodiment, another embodiment, some embodiments, one or more embodiments, a configuration, the configuration, another configuration, some configurations, one or more configurations, the subject technology, the disclosure, the present disclosure, other variations thereof and alike are for convenience and do not imply that a disclosure relating to such phrase(s) is essential to the subject technology or that such disclosure applies to all configurations of the subject technology. A disclosure relating to such phrase(s) may apply to all configurations, or one or more configurations. A disclosure relating to such phrase(s) may provide one or more examples. A phrase such as an aspect or some aspects may refer to one or more aspects and vice versa, and this applies similarly to other foregoing phrases.

The word "exemplary" is used herein to mean "serving as an example, instance, or illustration". Any embodiment described herein as "exemplary" or as an "example" is not necessarily to be construed as preferred or advantageous over other embodiments. Furthermore, to the extent that the term "include", "have", or the like is used in the description or the claims, such term is intended to be inclusive in a manner similar to the term "comprise" as "comprise" is interpreted when employed as a transitional word in a claim.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but are to be accorded the full scope consistent with the language claims, wherein reference to an element in the singular is not intended to mean "one and only one" unless specifically so stated, but rather "one or more". Unless specifically stated otherwise, the term "some" refers to one or more. Pronouns in the masculine (e.g., his) include the feminine and neuter gender (e.g., her and its) and vice versa. Headings and subheadings, if any, are used for convenience only and do not limit the subject disclosure.

## Claims

1. A device comprising:
at least one processor configured to:
receive (510), from a service provider (120), an indication (512) of a card account of a user;
determine (514) whether the card account is eligible to be added to a first device (102A) for use in a wireless transaction system;
transmit a notification to a messaging server (504) to cause transmission (514) of a first notification (518) to the first device (102A);
receive (520), from the first device (102A), a message including a security token and an identifier of the first notification (518);
determine (528), based on the message, whether one or more security mechanisms are implemented by the first device (102A) and/or whether a current authentication level of the first device (102A) meets a minimum authentication level for provisioning an applet corresponding to the card account on a secure element (208) of the first device (102A);
when the card account is determined to be eligible to be added to the first device (102A) for use in the wireless transaction system and the first device (102A) is determined to be implementing one or more security mechanisms and/or that the current authentication level of the first device (102A) meets the minimum authentication level, transmit a second notification to the first device (102A) for display, the second notification indicating that the card account is eligible to be added to the first device (102A) for use in the wireless transaction system; and
initiate provisioning, to the secure element of the first device (102A), the applet corresponding to the card account when an approval for adding the card account to the first device (102A) for use in the wireless transaction system is received in response to the second notification.

2. The device of claim 1, wherein the second notification further comprises a selectable element that can be selected to approve adding the card account to the first device (102A) for use in the wireless transaction system, and the approval for adding the card account to the first device (102A) comprises a selection of the selectable element.

3. The device of claim 1, wherein the first device (102A) is registered to an account associated with the user, and the at least one processor is further configured to:
identify a second device that is registered to the account;
determine whether the card account is eligible to be added to the second device for use in the wireless transaction system;
when the card account is determined to be eligible to be added to the second device for use in the wireless transaction system, transmit an other notification to the second device for display, the other notification indicating that the card account is eligible to be added to the second device; and
initiate provisioning, on an other secure element of the second device, of an other applet corresponding to the card account when an other approval for adding the card account to the second device for use in the wireless transaction system is received in response to the other notification.

4. The device of claim 1, wherein the at least one processor is further configured to:
determine whether the card account is eligible to be added to the first device (102A) for use in the wireless transaction system based at least on whether one or more security factors are satisfied by the first device (102A).

5. The device of claim 1, wherein the card account is issued by the service provider, and the at least one processor is further configured to:
determine whether the card account is eligible to be added to the first device (102A) for use in the wireless transaction system based at least on whether the service provider supports provisioning the applet corresponding to the card account on the secure element of the first device (102A) of the user.

6. The device of claim 1, wherein the indication of the card account is received responsive to:
the card account being used for a payment transaction with the service provider; or
the card account being registered with the service provider or set as a default payment mechanism for the service provider.

7. The device of claim 1, wherein the card account is issued by the service provider and the indication of the card account is received responsive to a payment applet corresponding to an other card account associated with the user being used for a payment transaction with the service provider, wherein the other card account is not associated with the service provider.

8. The device of claim 1, wherein:
the first device (102A) is registered to an account associated with the user;
the card account is issued by the service provider; and
the indication of the card account is received responsive to an other applet corresponding to the card account being provisioned by the service provider on a second device that is registered to the account associated with the user.

9. The device of claim 1, wherein the at least one processor is further configured to:
provide an identifier of the card account to the service provider;
receive, from the service provider, a set of commands to provision the applet corresponding to the card account on the secure element of the first device; and
transmit, to the secure element of the first device (102A), the set of commands for provisioning the applet corresponding to the card account on the secure element of the first device (102A).

10. The device of claim 1, wherein:
the applet is provisioned on the secure element of the device automatically, without user input, when the approval for adding the card account to the first device (102A) for use in the wireless transaction system is received responsive to the notification, and/or wherein the notification comprises a text message, a homescreen notification, or a notification in an application associated with the wireless transaction system.

11. The device of claim 3, wherein the at least one processor is further configured to:
determine whether a prior notification was previously transmitted to the first device (102A) or second device regarding adding the card account to the electronic payment application on the respective device; and
bypass transmission of the notification to the first device (102A) and/or transmission of the other notification to the second device to which the prior notification was previously transmitted.

12. A computer-implemented method comprising:
receiving (510) an identifier of a card account associated with a user;
determining whether the card account is eligible to be added to a device (102A) associated with the user for use in a wireless transaction system;
transmitting a notification to a messaging server (504) to cause transmission (514) of a first notification (518) to the device (102A);
receiving (520), from the device (102A), a message including a security token and an identifier of the first notification (518);
determining (528), based on the message, whether one or more security mechanisms are implemented by the device (102A) and/or whether a current authentication level of the device (102A) meets a minimum authentication level for provisioning an applet corresponding to the card account on a secure element (208) of the device (102A);
in response to a determination that the card account is eligible to be added to the device and that the device (102A) is implementing one or more security mechanisms and/or that the current authentication level of the first device (102A) meets the minimum authentication level, transmitting a second notification for display on the device (102A), the second notification comprising a selectable element that can be selected to initiate provisioning of the applet corresponding to the card account on the secure element of the device (102A); and
causing the applet to be provisioned on the secure element of the device (102A) responsive to receiving input indicating that the selectable element has been selected.

13. The computer-implemented method of claim 12, further comprising:
verifying, prior to transmitting the second notification, that the applet corresponding to the card account is eligible to be provisioned on the secure element of the device (102A).

14. The computer-implemented method of claim 12, wherein
the identifier of the card account is received from a service provider responsive to the card account being set as a default payment account for the service provider.

15. The computer-implemented method of claim 12, wherein the applet is provisioned on the secure element of the device (102A) without additional user input subsequent to receiving the input indicating that the selectable element has been selected.

## Patentansprüche

1. Vorrichtung, umfassend:
mindestens einen Prozessor, der konfiguriert ist zum:
Empfangen (510), von einem Dienstanbieter (120), einer Angabe (512) eines Kartenkontos eines Benutzers;
Bestimmen (514), ob das Kartenkonto geeignet ist, zu einer ersten Vorrichtung zur Verwendung in einem drahtlosen Transaktionssystem (102A) hinzugefügt zu werden;
Übertragen einer Benachrichtigung an einen Nachrichten-Server (504), um eine Übertragung (514) einer ersten Benachrichtigung (518) an die erste Vorrichtung (102A) zu bewirken;
Empfangen (520), von der ersten Vorrichtung (102A), einer Nachricht, die einen Sicherheits-Token und eine Kennung der ersten Benachrichtigung (518) einschließt;
Bestimmen (528), basierend auf der Nachricht, ob ein oder mehrere Sicherheitsmechanismen durch die erste Vorrichtung (102A) implementiert werden und/oder ob ein aktuelles Authentifizierungsniveau der ersten Vorrichtung (102A) ein Mindestauthentifizierungsniveau zum Bereitstellen eines Applets, das dem Kartenkonto entspricht, auf einem sicheren Element (208) der ersten Vorrichtung (102A) erfüllt;
wenn bestimmt wird, dass das Kartenkonto berechtigt ist, zu der ersten Vorrichtung (102A) zur Verwendung in dem drahtlosen Transaktionssystem hinzugefügt zu werden, und wenn bestimmt wird, dass die erste Vorrichtung (102A) einen oder mehrere Sicherheitsmechanismen implementiert und/oder dass das aktuelle Authentifizierungsniveau der ersten Vorrichtung (102A) das Mindestauthentifizierungsniveau erfüllt, Übertragen einer zweiten Benachrichtigung an die erste Vorrichtung (102A) zur Anzeige, wobei die zweite Benachrichtigung angibt, dass das Kartenkonto berechtigt ist, zu der ersten Vorrichtung (102A) zur Verwendung in dem drahtlosen Transaktionssystem hinzugefügt zu werden; und
Initiieren des Bereitstellens, an das sichere Element der ersten Vorrichtung (102A), des Applets, das dem Kartenkonto entspricht, wenn als Reaktion auf die zweite Benachrichtigung eine Genehmigung zum Hinzufügen des Kartenkontos zu der ersten Vorrichtung (102A) zur Verwendung in dem drahtlosen Transaktionssystem empfangen wird.

2. Vorrichtung nach Anspruch 1, wobei die zweite Benachrichtigung ferner ein auswählbares Element umfasst, das ausgewählt werden kann, um das Hinzufügen des Kartenkontos zu der ersten Vorrichtung (102A) zur Verwendung in dem drahtlosen Transaktionssystem zu genehmigen, und die Genehmigung zum Hinzufügen des Kartenkontos zu der ersten Vorrichtung (102A) eine Auswahl des auswählbaren Elements umfasst.

3. Vorrichtung nach Anspruch 1, wobei die erste Vorrichtung (102A) für ein Konto registriert ist, das dem Benutzer zugeordnet ist, und der mindestens eine Prozessor ferner konfiguriert ist zum:
Identifizieren einer zweiten Vorrichtung, die für das Konto registriert ist;
Bestimmen, ob das Kartenkonto geeignet ist, zu einer zweiten Vorrichtung zur Verwendung in einem drahtlosen Transaktionssystem hinzugefügt zu werden;
wenn bestimmt wird, dass das Kartenkonto berechtigt ist, zu der zweiten Vorrichtung zur Verwendung in dem drahtlosen Transaktionssystem hinzugefügt zu werden, eine andere Benachrichtigung an die zweite Vorrichtung zur Anzeige zu übertragen, wobei die andere Benachrichtigung angibt, dass das Kartenkonto berechtigt ist, zu der zweiten Vorrichtung hinzugefügt zu werden; und
Initiieren des Bereitstellens, auf einem anderen sicheren Element der zweiten Vorrichtung, eines anderen Applets, das dem Kartenkonto entspricht, wenn als Reaktion auf die andere Benachrichtigung eine Genehmigung zum Hinzufügen des Kartenkontos zu der zweiten Vorrichtung zur Verwendung in dem drahtlosen Transaktionssystem empfangen wird.

4. Vorrichtung nach Anspruch 1, wobei der mindestens eine Prozessor ferner konfiguriert ist zum:
Bestimmen, ob das Kartenkonto berechtigt ist, zur Verwendung in dem drahtlosen Transaktionssystem zu der ersten Vorrichtung (102A) hinzugefügt zu werden, basierend mindestens darauf, ob ein oder mehrere Sicherheitsfaktoren durch die erste Vorrichtung (102A) erfüllt werden.

5. Vorrichtung nach Anspruch 1, wobei das Kartenkonto von dem Dienstanbieter ausgegeben wird und der mindestens eine Prozessor ferner konfiguriert ist zum:
Bestimmen, ob das Kartenkonto berechtigt ist, zur Verwendung in dem drahtlosen Transaktionssystem zu der ersten Vorrichtung (102A) hinzugefügt zu werden, basierend mindestens darauf, ob der Dienstanbieter das Bereitstellen des Applets unterstützt, das dem Kartenkonto auf dem sicheren Element der ersten Vorrichtung (102A) des Benutzers entspricht.

6. Vorrichtung nach Anspruch 1, wobei die Angabe des Kartenkontos als Reaktion auf Folgendes empfangen wird:
das Kartenkonto für eine Zahlungsaktion mit dem Dienstanbieter verwendet wird; oder
das Kartenkonto bei dem Dienstanbieter registriert ist oder als Standardzahlungsmechanismus für den Dienstanbieter eingestellt ist.

7. Vorrichtung nach Anspruch 1, wobei das Kartenkonto von dem Dienstanbieter ausgegeben wird und die Angabe des Kartenkontos als Reaktion auf ein Zahlungs-Applet empfangen wird, das einem anderen, dem Benutzer zugeordneten Kartenkonto entspricht, das für eine Zahlungstransaktion mit dem Dienstanbieter verwendet wird, wobei das andere Kartenkonto nicht dem Dienstanbieter zugeordnet ist.

8. Vorrichtung nach Anspruch 1, wobei:
die erste Vorrichtung (102A) bei einem Konto registriert ist, das dem Benutzer zugeordnet ist;
das Kartenkonto vom Dienstanbieter ausgegeben wird; und
die Angabe des Kartenkontos als Reaktion auf ein anderes Applet empfangen wird, das dem Kartenkonto entspricht, das von dem Dienstanbieter auf einer zweiten Vorrichtung bereitgestellt wird, die bei dem dem Benutzer zugeordneten Konto registriert ist.

9. Vorrichtung nach Anspruch 1, wobei der mindestens eine Prozessor ferner konfiguriert ist zum:
Bereitstellen einer Kennung des Kartenkontos an den Dienstanbieter;
Empfangen eines Satzes von Befehlen von dem Dienstanbieter, um das Applet bereitzustellen, das dem Kartenkonto auf dem sicheren Element der ersten Vorrichtung entspricht; und
Übertragen, an das sichere Element der ersten Vorrichtung (102A), des Satzes von Befehlen zum Bereitstellen des Applets, das dem Kartenkonto auf dem sicheren Element der ersten Vorrichtung (102A) entspricht.

10. Vorrichtung nach Anspruch 1, wobei:
das Applet auf dem sicheren Element der Vorrichtung automatisch, ohne Benutzereingabe, bereitgestellt wird, wenn die Genehmigung zum Hinzufügen des Kartenkontos zu der ersten Vorrichtung (102A) zur Verwendung in dem drahtlosen Transaktionssystem als Reaktion auf die Benachrichtigung empfangen wird, und/oder wobei die Benachrichtigung eine Textnachricht, eine Homescreen-Benachrichtigung oder eine Benachrichtigung in einer Anwendung, die dem drahtlosen Transaktionssystem zugeordnet ist, umfasst.

11. Vorrichtung nach Anspruch 3, wobei der mindestens eine Prozessor ferner konfiguriert ist zum:
Bestimmen, ob eine vorherige Benachrichtigung zuvor an die erste Vorrichtung (102A) oder die zweite Vorrichtung übertragen wurde, bezüglich des Hinzufügens des Kartenkontos zu der elektronischen Zahlungsanwendung auf der jeweiligen Vorrichtung; und
Umgehen einer Übertragung der Benachrichtigung an die erste Vorrichtung (102A) und/oder einer Übertragung der anderen Benachrichtigung an die zweite Vorrichtung, an die die vorherige Benachrichtigung zuvor übertragen wurde.

12. Computerimplementiertes Verfahren, umfassend:
Empfangen (510) einer Kennung eines Kartenkontos, das einem Benutzer zugeordnet ist;
Bestimmen, ob das Kartenkonto berechtigt ist, zu einer Vorrichtung (102A) hinzugefügt zu werden, die dem Benutzer zur Verwendung in einem drahtlosen Transaktionssystem zugeordnet ist;
Übertragen einer Benachrichtigung an einen Nachrichten-Server (504), um eine Übertragung (514) einer ersten Benachrichtigung (518) zu der Vorrichtung (102A) zu bewirken;
Empfangen (520), von der Vorrichtung (102A), einer Nachricht, die einen Sicherheits-Token und eine Kennung der ersten Benachrichtigung (518) einschließt;
Bestimmen (528), basierend auf der Nachricht, ob ein oder mehrere Sicherheitsmechanismen durch die Vorrichtung (102A) implementiert werden und/oder ob ein aktuelles Authentifizierungsniveau der Vorrichtung (102A) ein Mindestauthentifizierungsniveau zum Bereitstellen eines Applets, das dem Kartenkonto entspricht, auf einem sicheren Element (208) der Vorrichtung (102A) erfüllt;
als Reaktion auf eine Bestimmung, dass das Kartenkonto dazu berechtigt ist, zu der Vorrichtung hinzugefügt zu werden, und dass die Vorrichtung (102A) einen oder mehrere Sicherheitsmechanismen implementiert und/oder dass die aktuelle Authentifizierungsstufe der ersten Vorrichtung (102A) das minimale Authentifizierungsniveau erfüllt, Übertragen einer zweiten Benachrichtigung zum Anzeigen auf der Vorrichtung (102A), wobei die zweite Benachrichtigung ein auswählbares Element umfasst, das ausgewählt werden kann, um das Bereitstellen des Applets zu initiieren, das dem Kartenkonto auf dem sicheren Element der Vorrichtung (102A) entspricht; und
Bewirken, dass das Applet auf dem sicheren Element der Vorrichtung (102A) als Reaktion auf das Empfangen einer Eingabe bereitgestellt wird, die angibt, dass das auswählbare Element ausgewählt wurde.

13. Computerimplementiertes Verfahren nach Anspruch 12, ferner umfassend:
Verifizieren, vor dem Übertragen der zweiten Benachrichtigung, dass das Applet, das dem Kartenkonto entspricht, berechtigt ist, auf dem sicheren Element der Vorrichtung (102A) bereitgestellt zu werden.

14. Computerimplementiertes Verfahren nach Anspruch 12, wobei:
die Kennung des Kartenkontos von einem Dienstleister als Reaktion darauf empfangen wird, dass das Kartenkonto als ein Standardzahlungskonto für den Dienstanbieter eingestellt ist.

15. ComputerimplementiertesVerfahren nach Anspruch 12, wobei das Applet auf dem sicheren Element der Vorrichtung (102A) ohne zusätzliche Benutzereingabe, nach dem Empfangen der Eingabe, die angibt, dass das auswählbare Element ausgewählt wurde, bereitgestellt wird.

## Revendications

1. Dispositif comprenant :
au moins un processeur configuré pour :
recevoir (510), à partir d'un fournisseur de services (120), une indication (512) d'un compte de carte d'un utilisateur ;
déterminer (514) si le compte de carte est éligible pour être ajouté à un premier dispositif (102A) pour une utilisation dans un système de transaction sans fil ;
transmettre une notification à un serveur de messagerie (504) pour provoquer une transmission (514) d'une première notification (518) au premier dispositif (102A) ;
recevoir (520), à partir du premier dispositif (102A), un message comportant un jeton de sécurité et un identifiant de la première notification (518) ;
déterminer (528), sur la base du message, si un ou plusieurs mécanismes de sécurité sont mis en oeuvre par le premier dispositif (102A) et/ou si un niveau d'authentification actuel du premier dispositif (102A) satisfait un niveau d'authentification minimal pour le provisionnement d'une appliquette correspondant au compte de carte sur un élément sécurisé (208) du premier dispositif (102A) ;
lorsque le compte de carte est déterminé comme étant éligible pour être ajouté au premier dispositif (102A) pour une utilisation dans le système de transaction sans fil et que le premier dispositif (102A) est déterminé comme mettant en oeuvre un ou plusieurs mécanismes de sécurité et/ou que le niveau d'authentification actuel du premier dispositif (102A) satisfait au niveau d'authentification minimal, transmettre une seconde notification au premier dispositif (102A) pour affichage, la seconde notification indiquant que le compte de carte est éligible pour être ajouté au premier dispositif (102A) pour une utilisation dans le système de transaction sans fil ; et
lancer le provisionnement, à l'élément sécurisé du premier dispositif (102A), de l'appliquette correspondant au compte de carte lorsqu'une approbation pour ajouter le compte de carte au premier dispositif (102A) pour une utilisation dans le système de transaction sans fil est reçue en réponse à la seconde notification.

2. Dispositif selon la revendication 1, dans lequel la seconde notification comprend en outre un élément sélectionnable qui peut être sélectionné pour approuver l'ajout du compte de carte au premier dispositif (102A) pour une utilisation dans le système de transaction sans fil, et l'approbation pour ajouter le compte de carte au premier dispositif (102A) comprend une sélection de l'élément sélectionnable.

3. Dispositif selon la revendication 1, dans lequel le premier dispositif (102A) est enregistré sur un compte associé à l'utilisateur, et l'au moins un processeur est en outre configuré pour :
identifier un second dispositif qui est enregistré sur le compte ;
déterminer si le compte de carte est éligible pour être ajouté au second dispositif pour une utilisation dans le système de transaction sans fil ;
lorsque le compte de carte est déterminé comme étant éligible pour être ajouté au second dispositif pour une utilisation dans le système de transaction sans fil, transmettre une autre notification au second dispositif pour affichage, l'autre notification indiquant que le compte de carte est éligible pour être ajouté au second dispositif ; et
lancer le provisionnement, sur un autre élément sécurisé du second dispositif, d'une autre appliquette correspondant au compte de carte lorsqu'une autre approbation pour ajouter le compte de carte au second dispositif pour une utilisation dans le système de transaction sans fil est reçue en réponse à l'autre notification.

4. Dispositif selon la revendication 1, dans lequel l'au moins un processeur est en outre configuré
pour :
déterminer si le compte de carte est éligible pour être ajouté au premier dispositif (102A) pour une utilisation dans le système de transaction sans fil sur la base au moins du fait qu'un ou plusieurs facteurs de sécurité sont satisfaits par le premier dispositif (102A).

5. Dispositif selon la revendication 1, dans lequel le compte de carte est émis par le fournisseur
de services, et ledit au moins un processeur est en outre configuré pour :
déterminer si le compte de carte est éligible pour être ajouté au premier dispositif (102A) pour une utilisation dans le système de transaction sans fil sur la base au moins du fait que le fournisseur de services prend en charge le provisionnement de l'appliquette correspondant au compte de carte sur l'élément sécurisé du premier dispositif (102A) de l'utilisateur.

6. Dispositif selon la revendication 1, dans lequel l'indication du compte de carte est reçue en réponse :
au compte de carte étant utilisé pour une transaction de paiement avec le fournisseur de services ; ou
au compte de carte étant enregistré auprès du fournisseur de services ou défini en tant que mécanisme de paiement par défaut pour le fournisseur de services.

7. Dispositif selon la revendication 1, dans lequel le compte de carte est émis par le fournisseur de services et l'indication du compte de carte est reçue en réponse à une appliquette de paiement correspondant à un autre compte de carte associé à l'utilisateur utilisé pour une transaction de paiement avec le fournisseur de services, dans lequel l'autre compte de carte n'est pas associé au fournisseur de services.

8. Procédé selon la revendication 1, dans lequel :
le premier dispositif (102A) est enregistré sur un compte associé à l'utilisateur ;
le compte de carte est émis par le fournisseur de services ; et
l'indication du compte de carte est reçue en réponse à une autre appliquette correspondant au compte de carte provisionné par le fournisseur de services sur un second dispositif qui est enregistré au compte associé à l'utilisateur.

9. Dispositif selon la revendication 1, dans lequel l'au moins un processeur est en outre configuré pour :
fournir un identifiant du compte de carte au fournisseur de services ;
recevoir, à partir du fournisseur de services, un ensemble de commandes à provisionner à l'appliquette correspondant au compte de carte sur l'élément sécurisé du premier dispositif ; et
transmettre, à l'élément sécurisé du premier dispositif (102A), l'ensemble de commandes de provisionnement de l'appliquette correspondant au compte de carte sur l'élément sécurisé du premier dispositif (102A).

10. Procédé selon la revendication 1, dans lequel :
l'appliquette est provisionnée sur l'élément sécurisé du dispositif automatiquement, sans entrée d'utilisateur, lorsque l'approbation pour l'ajout du compte de carte au premier dispositif (102A) pour une utilisation dans le système de transaction sans fil est reçue en réponse à la notification, et/ou dans lequel la notification comprend un message texte, une notification d'écran d'accueil ou une notification dans une application associée au système de transaction sans fil.

11. Dispositif de la revendication 3, dans lequel l'au moins un processeur est en outre configuré pour :
déterminer si une notification antérieure a été précédemment transmise au premier dispositif (102A) ou au second dispositif concernant l'ajout du compte de carte à l'application de paiement électronique sur le dispositif respectif ; et
contourner une transmission de la notification au premier dispositif (102A) et/ou une transmission de l'autre notification au second dispositif auquel la notification antérieure a été précédemment transmise.

12. Procédé mis en oeuvre par ordinateur comprenant :
la réception (510) d'un identifiant d'un compte de carte associé à un utilisateur ;
la détermination du fait de savoir si le compte de carte est éligible pour être ajouté à un dispositif (102A) associé à l'utilisateur pour une utilisation dans un système de transaction sans fil ;
la transmission d'une notification à un serveur de messagerie (504) pour amener la transmission (514) d'une première notification (518) au dispositif (102A) ;
la réception (520), à partir du dispositif (102A), d'un message comportant un jeton de sécurité et un identifiant de la première notification (518) ;
la détermination (528), sur la base du message, du fait de savoir si un ou plusieurs mécanismes de sécurité sont mis en oeuvre par le dispositif (102A) et/ou si un niveau d'authentification actuel du dispositif (102A) satisfait un niveau d'authentification minimal pour le provisionnement d'une appliquette correspondant au compte de carte sur un élément sécurisé (208) du dispositif (102A) ;
en réponse à une détermination du fait que le compte de carte est éligible pour être ajouté au dispositif et que le dispositif (102A) met en oeuvre un ou plusieurs mécanismes de sécurité et/ou que le niveau d'authentification actuel du premier dispositif (102A) satisfait au niveau d'authentification minimal, la transmission d'une seconde notification pour affichage sur le dispositif (102A), la seconde notification comprenant un élément sélectionnable qui peut être sélectionné pour lancer le provisionnement de l'appliquette correspondant au compte de carte sur l'élément sécurisé du dispositif (102A) ; et
le fait de provoquer le provisionnement de l'appliquette sur l'élément sécurisé du dispositif (102A) en réponse à la réception d'une entrée indiquant que l'élément sélectionnable a été sélectionné.

13. Procédé mis en oeuvre par ordinateur selon la revendication 12, comprenant en outre :
la vérification, préalablement à la transmission de la seconde notification, du fait que l'appliquette correspondant au compte de carte est éligible pour être provisionnée sur l'élément sécurisé du dispositif (102A).

14. Procédé mis en oeuvre par ordinateur selon la revendication 12, dans lequel :
l'identifiant du compte de carte est reçu à partir d'un fournisseur de services en réponse au fait que le compte de carte est défini comme un compte de paiement par défaut pour le fournisseur de services.

15. Procédé mis en oeuvre par ordinateur selon la revendication 12, dans lequel l'appliquette est provisionnée sur l'élément sécurisé du dispositif (102A) sans entrée utilisateur supplémentaire après réception de l'entrée indiquant que l'élément sélectionnable a été sélectionné.
